# EUROPEAN PATENT APPLICATION

(11) **EP 3 613 820 A1**
(43) Date of publication of application: **26.02.2020**
(21) Application number: 18190767.6
(22) Date of filing: 24.08.2018
(51) Int. Cl.: C09J 7/38, C08K 3/36

(54) **MULTILAYER PRESSURE-SENSITIVE ADHESIVE ASSEMBLY**

(71) Applicant: 3M Innovative Properties Company, Saint Paul, MN 55133-3427 (US)
(72) Inventor: Unverhau, Kerstin, 41453 Neuss (DE); Mechernich, Silke, 41453 Neuss (DE); Kuester, Frank, 41453 Neuss (DE)
(74) Representative: Gabriel, Kiroubagaranne

(57) **Abstract**

The present disclosure relates to a multilayer pressure sensitive adhesive assembly comprising at least a first pressure sensitive adhesive layer and a second pressure sensitive adhesive layer adjacent to the first pressure sensitive adhesive layer, wherein the first pressure sensitive adhesive layer and the second pressure sensitive adhesive layer comprise a polymer base material selected from the group of polyacrylates, wherein the second pressure sensitive adhesive layer has a thickness no greater than 250 micrometres and comprises silica nanoparticles having an average particle size no greater than 400 nm when measured by Dynamic Light Scattering (DLS) techniques according to the test method described in the experimental section, and wherein the first pressure sensitive adhesive layer has a thickness in a range from 250 to 5000 micrometres and is substantially free of particulate filler material.

According to another aspect, the present disclosure is directed to an article comprising a medium surface energy substrate and a multilayer pressure sensitive adhesive assembly as described above adjacent to the medium surface energy substrate.

In another aspect, the present disclosure relates to the use of a multilayer pressure sensitive adhesive assembly as described above for the bonding to a medium surface energy substrate or a high surface energy substrate.

## Description

### Technical Field

The present disclosure relates generally to the field of adhesives, more specifically to the field of pressure sensitive adhesive (PSA) compositions and multilayer assemblies.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adhered, and (4) sufficient cohesive strength.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate-based copolymers, natural rubber, synthetic rubbers, and silicones.

With broadened use of pressure-sensitive adhesive tapes over the years, performance requirements have become more and more demanding. Shear holding capability, for example, which originally was intended for applications supporting modest loads at room temperature, has now increased substantially for many applications in terms of operating temperature and load. Indeed, many specific applications require pressure sensitive adhesives to support a load in high stress conditions such as e.g. exposure to intense weathering conditions or under intensive usage during which the pressure-sensitive adhesive tapes are subjected to high mechanical and/or chemical stress.

When used for transparent bonding applications, such as e.g. for bonding transparent material or for applications where a transparent or colorless adhesive tape is preferred, pressure sensitive adhesive tapes have to provide operability at various challenging conditions such as exposure to a wide temperature range and ability to bond to a broad range of substrates including metal, glass and the so-called medium surface energy (MSE) plastics, such as PMMA, ABS and polycarbonate.

In modern transportation, construction, decoration, home improvement and even electronics market applications, the need to achieve transparent bonding and reduce the weight of component parts has led to increasing usage of MSE plastic materials, which are known to be challenging substrates for adhesive bonding.

The pressure sensitive adhesive materials known in the prior art for transparent bonding applications do not often provide satisfactory adhesive performance to the so-called MSE substrates. In particular, the peel force or shear resistance on these challenging-to-bond substrates, do not often fulfill the requirements, especially under environmental stress like altering temperatures and humidity. This deficiency may partly be overcome by the addition of specific additives, in particular tackifying resins, but often at the detriment of the desirable transparency characteristics.

It is therefore a recognized and continuous challenge in the adhesive tapes industry to develop pressure sensitive adhesive tapes suitable for transparent bonding applications and providing excellent adhesion and outstanding cohesion properties to difficult-to-bond MSE substrates, while maintaining satisfactory transparency characteristics.

Without contesting the technical advantages associated with the pressure sensitive adhesive compositions known in the art, there is still a need for a stable and cost-effective pressure sensitive adhesive tape suitable for transparent bonding applications and having excellent transparency characteristics, while providing excellent and versatile adhesion characteristics on MSE substrates.

### Summary

According to one aspect, the present disclosure relates to a multilayer pressure sensitive adhesive assembly comprising at least a first pressure sensitive adhesive layer and a second pressure sensitive adhesive layer adjacent to the first pressure sensitive adhesive layer, wherein the first pressure sensitive adhesive layer and the second pressure sensitive adhesive layer comprise a polymer base material selected from the group of polyacrylates, wherein the second pressure sensitive adhesive layer has a thickness no greater than 250 micrometres and comprises silica nanoparticles having an average particle size no greater than 400 nm when measured by Dynamic Light Scattering (DLS) techniques according to test method described in the experimental section, and wherein the first pressure sensitive adhesive layer has a thickness in a range from 250 to 5000 micrometres and is substantially free of particulate filler material.

According to another aspect, the present disclosure is directed to an article comprising a medium surface energy substrate and a multilayer pressure sensitive adhesive assembly as described above adjacent to the medium surface energy substrate.

According to still another aspect, the present disclosure relates to the use of a multilayer pressure sensitive adhesive assembly as described above for the bonding to a medium surface energy substrate or a high surface energy substrate.

### Detailed description

According to a first aspect, the present disclosure relates to a multilayer pressure sensitive adhesive assembly comprising at least a first pressure sensitive adhesive layer and a second pressure sensitive adhesive layer adjacent to the first pressure sensitive adhesive layer, wherein the first pressure sensitive adhesive layer and the second pressure sensitive adhesive layer comprise a polymer base material selected from the group of polyacrylates, wherein the second pressure sensitive adhesive layer has a thickness no greater than 250 micrometres and comprises silica nanoparticles having an average particle size no greater than 400 nm when measured by Dynamic Light Scattering (DLS) techniques according to test method described in the experimental section, and wherein the first pressure sensitive adhesive layer has a thickness in a range from 250 to 5000 micrometres and is substantially free of particulate filler material.

In the context of the present disclosure, it has surprisingly been found that a multilayer pressure sensitive adhesive assembly as described above, provides excellent adhesion and outstanding cohesion properties, in particular with respect to peel forces and shear resistance, to difficult-to-bond MSE substrates, while maintaining excellent transparency characteristics.

Without wishing to be bound by theory, it is believed that this very unique combination of advantageous properties is due in particular to the presence of silica nanoparticles having an average particle size no greater than 400 nm, when measured by Dynamic Light Scattering (DLS) techniques according to test method described in the experimental section, specifically and solely in the second pressure sensitive adhesive layer, while the first pressure sensitive adhesive layer is substantially free of particulate filler material.

This is very surprising and counter-intuitive finding in many aspects, not only because the presence of particles, in particular silica nanoparticles, in multilayer adhesive tapes are generally assumed to detrimentally affect transparency of the resulting tape, but also because silica nanoparticles are generally recognized to beneficially affect only shear properties and not peel performance, let alone on difficult-to-bond MSE substrates. Furthermore, it is generally assumed that the presence of a polymeric foam layer in a multilayer pressure sensitive adhesive assembly, in particular a polymeric foam layer resulting from the incorporation hollow particulate filler material (such as e.g. expandable microspheres, glass microspheres and glass bubbles), is necessary to ensure acceptable adhesion properties to challenging-to-bond substrates like MSE substrates. It is indeed commonly recognized that a polymeric foam layer in a multilayer pressure sensitive adhesive assembly helps addressing deforming issues and energy distribution which are known to affect the overall adhesion properties of the multilayer assembly.

As such, the multilayer pressure sensitive adhesive assemblies of the present disclosure are outstandingly suitable for transparent bonding applications, in particular for bonding transparent material (in particular transparent MSE plastic materials, such as PMMA, ABS and polycarbonate) or for applications where a transparent or colorless adhesive tape is preferred. The multilayer pressure sensitive adhesive assemblies of the present disclosure may find appropriate applications in various industries, in particular in transportation, construction, decoration, home improvement and even electronics market applications.

In the context of the present disclosure, the expression "the first pressure sensitive adhesive layer is substantially free of particulate filler material" is meant to express that the first pressure sensitive adhesive layer comprises no greater than 0.5 wt%, in particular no greater than 0.1 wt%, or even no greater than 0.05 wt%, of particulate filler material, based on the total weight of the first pressure sensitive adhesive layer.

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

In the context of the present disclosure, the expression "high surface energy substrates" is meant to refer to those substrates having a surface energy of more than 350 dynes per centimeter, typically more than 400 dynes per centimeter, and more typically to those substrates having a surface energy comprised between 400 and 1100 dynes per centimeter. Included among such materials are metal substrates (e.g. aluminum, stainless steel), and glass.

The surface energy is typically determined from contact angle measurements as described, for example, in ASTM D7490-08.

The term superimposed, as used throughout the description, means that two or more layers of the liquid precursors of the polymers or of the polymer layers of the multilayer pressure sensitive adhesive assembly, are arranged on top of each other. Superimposed liquid precursor layers or polymer layers may be arranged directly next to each other so that the upper surface of the lower layer is abutting the lower surface of the upper layer.

The term adjacent, as used throughout the description, refers to two superimposed layers within the precursor multilayer pressure sensitive adhesive assembly or the cured multilayer pressure sensitive adhesive assembly which are arranged directly next to each other, i.e. which are abutting each other.

The terms "glass transition temperature" and "Tg" are used interchangeably and refer to the glass transition temperature of a (co)polymeric material or a mixture. Unless otherwise indicated, glass transition temperature values are estimated by the Fox equation, as detailed hereinafter.

In the context of the present disclosure, the expression "high Tg (meth)acrylate copolymer" is meant to designate a (meth)acrylate copolymer having a Tg of above 50°C.

In the context of the present disclosure, the expression "high Tg (meth)acrylic acid ester monomer units" is meant to designate (meth)acrylic acid ester monomer units having a Tg of above 50°C, as a function of the homopolymer of said high Tg monomers.

In the context of the present disclosure, the expression "low Tg (meth)acrylic acid ester monomer units" is meant to designate (meth)acrylic acid ester monomer units having a Tg of below 20°C, as a function of the homopolymer of said low Tg monomers.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl.

According to a particular aspect, the multilayer pressure sensitive adhesive assembly of the present disclosure has an overall light-transmission (resulting from the light-transmission of the multilayer assembly), of at least 80%, at least 85% or even at least 90%, relative to visible light, when measured according to ASTM E-1438.

According to another particular aspect, the multilayer pressure sensitive adhesive assembly of the present disclosure has an overall haze (resulting from the haze of the multilayer assembly) no greater than 2, no greater than 1.8, no greater than 1.6, no greater than 1.5, no greater than 1.4, or even no greater than 1.2, when measured in the transmissive mode according to ASTM D-1003-95.

In a typical aspect of the disclosure, the first pressure sensitive adhesive layer of the multilayer pressure sensitive adhesive assembly has a thickness in a range from 250 to 4000 micrometres, from 300 to 3000 micrometres, from 400 to 3000 micrometres, from 500 to 2500 micrometres, from 600 to 2500 micrometres, from 600 to 2000 micrometres, or even from 800 to 2000 micrometres.

In another typical aspect of the disclosure, the second pressure sensitive adhesive layer of the multilayer pressure sensitive adhesive assembly has a thickness no greater than 220 micrometres, no greater than 200 micrometres, no greater than 180 micrometres, no greater than 150 micrometres, no greater than 100 micrometres, no greater than 80 micrometres, no greater than 60 micrometres, or even no greater than 50 micrometres.

In still another typical aspect of the disclosure, the second pressure sensitive adhesive layer of the multilayer pressure sensitive adhesive assembly has a thickness in a range from 20 to 250 micrometres, from 30 to 220 micrometres, from 40 to 200 micrometres, from 50 to 200 micrometres, or even from 60 to 180 micrometres.

According to the present disclosure, the second pressure sensitive adhesive layer of the multilayer pressure sensitive adhesive assembly comprises silica nanoparticles having an average particle size no greater than 400 nm when measured by Dynamic Light Scattering (DLS) techniques according to test method described in the experimental section.

In the context of the present disclosure, any silica nanoparticles may be used herein, provided they meet the above-mentioned average particle size requirement. Suitable silica nanoparticles for use herein may be easily identified by those skilled in the art in the light of the present disclosure.

In a beneficial aspect of the present disclosure, the silica nanoparticles for use herein have an average particle size no greater than 350 nm, no greater than 300 nm, no greater than 250 nm, no greater than 200 nm, no greater than 150 nm, no greater than 100 nm, no greater than 80 nm, no greater than 60 nm, no greater than 50 nm, no greater than 40 nm, no greater than 30 nm, or even no greater than 20 nm, when measured by Dynamic Light Scattering (DLS) techniques according to test method described in the experimental section.

In another beneficial aspect of the present disclosure, the silica nanoparticles for use herein have an average particle size in a range from 1 to 400 nm, from 2 to 350 nm, from 3 to 300 nm, from 3 to 250 nm, from 5 to 200 nm, from 5 to 150 nm, from 5 to 100 nm, from 5 to 80 nm, from 5 to 60 nm, or even from 10 to 50 nm, when measured by Dynamic Light Scattering (DLS) techniques according to test method described in the experimental section.

As will be easily apparent to those skilled in the art, in the light of the disclosure, the silica nanoparticles may or may not be provided with suitable surface modification, depending on the nature of the polyacrylate base material used to form the second pressure sensitive adhesive layer of the multilayer pressure sensitive adhesive assembly.

According to an advantageous aspect of the multilayer pressure sensitive adhesive assembly according to the present disclosure, the silica nanoparticles for use herein are provided with a surface modification selected from the group of hydrophobic surface modifications, hydrophilic surface modifications, and any combinations thereof.

According to a preferred aspect, the silica nanoparticles for use in the present disclosure are provided with a hydrophobic surface modification.

According to another preferred aspect of the disclosure, the silica nanoparticles for use herein are selected from the group consisting of fumed silica nanoparticles.

In a particularly preferred aspect of the present disclosure, the silica nanoparticles for use herein are selected from the group consisting of hydrophobic fumed silica nanoparticles, hydrophilic fumed silica nanoparticles, and any combinations thereof.

In a most preferred aspect of the multilayer pressure sensitive adhesive assembly according to the present disclosure, the silica nanoparticles for use herein are selected from the group of hydrophobic fumed silica nanoparticles.

According to an advantageous aspect, the silica nanoparticles for use herein have a specific surface area (BET) in a range from 50 to 200 m²/g, from 60 to 180 m²/g, from 60 to 160 m²/g, from 50 to 150 m²/g, from 60 to 150 m²/g, from 80 to 150 m²/g, or even from 90 to 130 m²/g, when measured according to BS ISO 9277: 2010.

In a typical aspect of the present disclosure, the silica nanoparticles having an average particle size no greater than 400 nm are present in the second pressure sensitive adhesive layer of the multilayer pressure sensitive adhesive assembly, in an amount ranging from 1 to 30 wt%, from 2 to 25 wt%, from 2 to 20 wt%, or even from 3 to 15 wt%, based on the weight of the second pressure sensitive adhesive layer.

According to the present disclosure, the first pressure sensitive adhesive layer of the multilayer pressure sensitive adhesive assembly is substantially free of particulate filler material.

In a particular aspect of the present disclosure, the first pressure sensitive adhesive layer is substantially free of particulate filler material having an average particle size no greater than 400 nm when measured by Dynamic Light Scattering (DLS) techniques according to test method described in the experimental section.

In another particular aspect of the present disclosure, the first pressure sensitive adhesive layer is substantially free of particulate filler material having an average particle size greater than 400 nm when measured by Dynamic Light Scattering (DLS) techniques according to test method described in the experimental section.

According to an advantageous aspect, the first pressure sensitive adhesive layer is substantially free of particulate filler material selected from the group consisting of hollow (non-porous) particulate filler material, in particular hollow microspheres, expandable or expanded microspheres, glass beads, glass bubbles, glass microspheres, ceramic microspheres, hollow polymeric particles, and any combinations or mixtures thereof.

According to a typical aspect, the first pressure sensitive adhesive layer for use in the multilayer pressure sensitive adhesive assembly is substantially free of particulate filler material selected from the group consisting of silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof.

In another typical aspect of the multilayer pressure sensitive adhesive assembly according to the disclosure, the first pressure sensitive adhesive layer does not take the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume.

A polymeric foam layer has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the second pressure sensitive adhesive polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated. Alternatively, the voids may result from the incorporation of hollow fillers, such as hollow polymeric particles, hollow glass microspheres or hollow ceramic microspheres.

According to an advantageous aspect of the present disclosure, the multilayer pressure sensitive adhesive assembly is in the form of a skin/core multilayer pressure sensitive adhesive assembly, wherein the first pressure sensitive adhesive layer is the core layer of the multilayer pressure sensitive adhesive assembly and the second pressure sensitive adhesive layer is the skin layer of the multilayer pressure sensitive adhesive assembly.

Multilayer pressure sensitive adhesive assemblies of this type, and in particular dual layer polymeric tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the first pressure sensitive adhesive polymeric layer (also commonly referred to as the core layer).

According to a further advantageous aspect, the multilayer pressure sensitive adhesive assembly of the present disclosure is in the form of a multilayer pressure sensitive adhesive assembly further comprising a third pressure sensitive adhesive layer thereby forming e.g. a three-layered multilayer pressure sensitive adhesive assembly. Preferably, the third pressure sensitive adhesive layer is adjacent to the first pressure sensitive adhesive layer in the side of the first pressure sensitive adhesive layer which is opposed to the side of the first pressure sensitive adhesive layer adjacent to the second pressure sensitive adhesive layer. Preferably still, the second pressure sensitive adhesive polymeric foam layer, the first pressure sensitive adhesive polymeric layer and the third pressure sensitive adhesive layer are superimposed.

In a beneficial aspect, the multilayer pressure sensitive adhesive assembly is in the form of a skin/core/skin multilayer pressure sensitive adhesive assembly, wherein the first pressure sensitive adhesive layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

The third pressure sensitive adhesive layer may have any composition commonly known in the art. As such, the composition of the third pressure sensitive adhesive layer for use in the multilayer pressure sensitive adhesive assemblies of the present disclosure is not particularly limited.

In an exemplary aspect, the third pressure sensitive adhesive layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

According to an advantageous aspect, the first pressure sensitive adhesive layer, the second pressure sensitive adhesive layer and the third pressure sensitive adhesive layer comprise a polymer base material selected from the group consisting of polyacrylates.

According to a preferred aspect of the pressure sensitive adhesive assemblies of the present disclosure, the first pressure sensitive adhesive layer, the second pressure sensitive adhesive layer and the third pressure sensitive adhesive layer comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 30, from 1 to 20, or even from 1 to 15 carbon atoms.

According to another preferred aspect of the present disclosure, the first pressure sensitive adhesive layer, the second pressure sensitive adhesive layer and the third pressure sensitive adhesive layer comprise a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In an advantageous aspect of the present disclosure, the linear or branched alkyl (meth)acrylate ester for use herein is selected from the group consisting of iso-octyl (meth)acrylate, 2-ethylhexyl (meth)acrylate, 2-propylheptyl (meth)acrylate, butyl acrylate, and any combinations or mixtures thereof.

In a particular advantageous aspect of the present disclosure, the linear or branched alkyl (meth)acrylate ester for use herein is selected from the group consisting of iso-octyl acrylate, 2-ethylhexyl acrylate and 2-propylheptyl acrylate.

According to a preferred aspect of the pressure sensitive adhesive assemblies of the present disclosure, the polymer base material for use herein comprises a polar comonomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof.

According to another preferred aspect of the pressure sensitive adhesive assemblies of the present disclosure, the polymer base material further comprises a high Tg (meth)acrylate copolymer having a weight average molecular weight (Mw) of above 20,000 Daltons.

In a particular aspect, the high Tg (meth)acrylate copolymer for use herein comprises:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units; and
v. optionally, vinyl monomer units.

In a typical aspect, the high Tg (meth)acrylate copolymer for use herein has a Tg of above 50°C, above 75°C, or even above 100°C, as estimated by the Fox equation.

According to a particular aspect, the high Tg (meth)acrylate copolymer for use herein has a weight average molecular weight (Mw) of above 25,000 Daltons, above 30,000 Daltons, above 35,000 Daltons, or even above 40,000 Daltons.

In another aspect, the high Tg (meth)acrylate copolymer for use herein has a weight average molecular weight (Mw) of below 100,000 Daltons, below 80,000 Daltons, below 75,000 Daltons, below 60,000 Daltons, below 50,000 Daltons, or even below 45,000 Daltons.

The high Tg (meth)acrylate copolymer may comprise 100 parts by weight of the high Tg monomer(s). In other aspects, the high Tg (meth)acrylate copolymer may comprise the additional monomer units, each in amounts such that the Tg of the resulting copolymer is above 50°C, above 75°C, or even above 100°C, as estimated by the Fox equation.

According to a beneficial aspect of the multilayer pressure sensitive adhesive assembly according to the disclosure, the high Tg (meth)acrylate copolymer comprises:
i. up to 100 parts by weight of high Tg (meth)acrylic acid ester monomer units;
ii. from 0 to 15, or even from 1 to 5 parts by weight of acid functional ethylenically unsaturated monomer units;
iii. from 0 to 50, or even from 1 to 25 parts by weight of optional low Tg (meth)acrylic acid ester monomer units;
iv. from 0 to 10, or even from 1 to 5 parts by weight of optional further non-acid functional, ethylenically unsaturated polar monomer units; and
v. from 0 to 5, or even from 1 to 5 parts by weight of optional vinyl monomer units;
based on 100 parts by weight of the total monomers of the high Tg (meth)acrylate copolymer.

Suitable high Tg (meth)acrylic acid ester monomer units for use herein may be advantageously selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any combinations or mixtures thereof.

Suitable low Tg (meth)acrylic acid ester monomer units for use herein include those having one ethylenically unsaturated group and a glass transition temperature of less than 0°C (as a function of the homopolymer). Exemplary low Tg (meth)acrylic acid ester monomer units for use herein include, but are not limited to, n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate and ethoxylated-nonylacrylate. Especially preferred are 2-ethyl-hexylacrylate, ethoxy-ethoxyethyl acrylate, tridecylacrylate and ethoxylated nonylacrylate. Other monomers may be used as described for the low Tg copolymer (*supra*).

The high Tg (meth)acrylate (co)polymer herein may be prepared by any conventional free radical polymerization method, including solution, radiation, bulk, dispersion, emulsion, and suspension processes. The resulting adhesive (co)polymers may be random or block (co)polymers.

The adhesive copolymers may be prepared via suspension polymerizations as disclosed in U.S. 3,691,140 (Silver); 4,166,152 (Baker et al.); 4,636,432 (Shibano et al); 4,656,218 (Kinoshita); and 5,045,569 (Delgado).

Polymerization via emulsion techniques may require the presence of an emulsifier (which may also be called an emulsifying agent or a surfactant). Useful emulsifiers for the present disclosure include those selected from the group consisting of anionic surfactants, cationic surfactants, nonionic surfactants, and mixtures thereof. Preferably, an emulsion polymerization is carried out in the presence of anionic surfactant(s). A useful range of surfactant concentration is from about 0.5 to about 8 weight percent, preferably from about 1 to about 5 weight percent, based on the total weight of all monomers of the emulsion pressure-sensitive adhesive.

Alternatively, the copolymers can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Preferred photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Particularly preferred photoinitiators are IRGACURE™ 819, 651, 184 and 2959.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the polymers.

Water-soluble and oil-soluble initiators useful in preparing the high Tg (co)polymers used in the present disclosure are initiators that, on exposure to heat, generate free-radicals which initiate (co)polymerization of the monomer mixture. Water-soluble initiators are preferred for preparing the (meth)acrylate polymers by emulsion polymerization. Suitable water-soluble initiators include but are not limited to those selected from the group consisting of potassium persulfate, ammonium persulfate, sodium persulfate, and mixtures thereof; oxidation-reduction initiators such as the reaction product of the above-mentioned persulfates and reducing agents such as those selected from the group consisting of sodium metabisulfite and sodium bisulfite; and 4,4'-azobis(4-cyanopentanoic acid) and its soluble salts (e.g., sodium, potassium). The preferred water-soluble initiator is potassium persulfate. Suitable oil-soluble initiators include but are not limited to those selected from the group consisting of azo compounds such as VAZO™ 64 (2,2'-azobis(isobutyronitrile)) and VAZO™ 52 (2,2'-azobis(2,4-dimethylpentanenitrile)), both available from E.I. du Pont de Nemours Co., peroxides such as benzoyl peroxide and lauroyl peroxide, and mixtures thereof. The preferred oil-soluble thermal initiator is (2,2'-azobis(isobutyronitrile)). When used, initiators may comprise from about 0.05 to about 1 part by weight, or from about 0.1 to about 0.5 part by weight based on 100 parts by weight of monomer components in the first pressure-sensitive adhesive.

For the high Tg (meth)acrylate copolymer, a useful predictor of interpolymer Tg for specific combinations of various monomers can be computed by application of Fox Equation: 1/Tg = ∑Wi/Tgi. In this equation, Tg is the glass transition temperature of the mixture, Wi is the weight fraction of component i in the mixture, and Tgi is the glass transition temperature of component i, and all glass transition temperatures are in Kelvin (K). As used herein the term "high Tg monomer" refers to a monomer, which when homopolymerized, produce a (meth)acryloyl polymer having a Tg of above 50°C. The incorporation of the high Tg monomer to the high Tg (meth)acrylate copolymer is sufficient to raise the glass transition temperature of the resulting (meth)acrylate copolymer to above 50°C, above 75°C, or even above 100°C, as calculated using the Fox Equation.

If desired, a chain transfer agent may be added to the monomer mixture of the high Tg (co)polymers to produce a (co)polymer having the desired molecular weight. A chain transfer is preferably used in the preparation of the high Tg (co)polymer. It has been observed that when the molecular weight of the high Tg (co)polymer is less than 20k, the peel performance at elevated temperatures is reduced. Further, when the M_{w} is greater than about 100k, the immiscibility of the components is such that the tack of the composition is reduced.

Examples of useful chain transfer agents include but are not limited to those selected from the group consisting of carbon tetrabromide, alcohols, mercaptans, and mixtures thereof. When present, the preferred chain transfer agents are isooctyl thioglycolate and carbon tetrabromide. The chain transfer agent may be used in amounts such that the high Tg (co)polymer has a M_{w} of greater than 20k, and preferable less than 100 k. The monomer mixture may further comprise up to about 5 parts by weight of a chain transfer agent, typically about 0.01 to about 5 parts by weight, if used, preferably about 0.5 parts by weight to about 3 parts by weight, based upon 100 parts by weight of the total monomer mixture.

In order to increase cohesive strength of the first pressure sensitive adhesive layer and/or the second pressure sensitive adhesive layer and/or the third pressure sensitive adhesive layer composition, a crosslinking additive may be added to the adhesive composition. Two main types of crosslinking additives are exemplary. The first crosslinking additive is a thermal crosslinking additive such as multifunctional aziridine, isocyanate and epoxy. One example of aziridine crosslinker is 1,1' -isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the low Tg copolymer component and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A, the relevant contents of which are herewith incorporated by reference. Suitable accelerant and retardant systems for use herein are described e.g. in the description of US-A1- 2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500. In another embodiment, chemical crosslinkers, which rely upon free radicals to carry out the crosslinking reaction, may be employed. Reagents such as, for example, peroxides serve as a source of free radicals. When heated sufficiently, these precursors will generate free radicals that bring about a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxy-phenyl)-s-triazine. In some embodiments, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

Hydrolyzable, free-radically copolymerizable crosslinkers, such as monoethylenically unsaturated mono-, di-, and trialkoxy silane compounds including, but not limited to, methacryloxypropyltrimethoxysilane (available from Gelest, Inc., Tullytown, PA), vinyl dimethylethoxysilane, vinyl methyl diethoxysilane, vinyltriethoxysilane, vinyltrimethoxysilane, vinyltriphenoxysilane, and the like, are also useful crosslinking agents.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition. More specifically, the crosslinker may be present in amounts from 0.01 to 5 parts, preferably 0.05 to 1 parts, based on 100 parts total monomers of the low Tg copolymer.

The first pressure sensitive adhesive layer and/or the second pressure sensitive adhesive layer and/or the third pressure sensitive adhesive layer composition for use herein may optionally comprise a hydrogenated hydrocarbon tackifier to improve its adhesion properties, i.e. develop more aggressive tack.

Other additives can be added to enhance the performance of the pressure sensitive adhesive compositions. For example, leveling agents, ultraviolet light absorbers, hindered amine light stabilizers (HALS), oxygen inhibitors, wetting agents, rheology modifiers, defoamers, biocides, dyes and the like, can be included herein. All these additives and the use thereof are well known in the art. It is understood that any of these compounds can be used so long as they do not deleteriously affect the adhesive properties. Useful as additives to the first pressure sensitive adhesive composition are UV absorbers and hindered amine light stabilizers.

According to a beneficial aspect of the disclosure, the third pressure sensitive adhesive layer of the multilayer pressure sensitive adhesive assembly further comprises silica nanoparticles as described above.

According to an alternatively beneficial aspect, the third pressure sensitive adhesive layer of the multilayer pressure sensitive adhesive assembly is substantially free of particulate filler material as described above.

In an exemplary aspect of the disclosure, the second pressure sensitive adhesive layer and the third pressure sensitive adhesive layer have (substantially) the same composition.

According to an advantageous aspect of the pressure sensitive assembly of the present disclosure, the first pressure sensitive adhesive layer and/or the second pressure sensitive adhesive layer and/or the third pressure sensitive adhesive layer have a composition comprising:
a) a (meth)acrylate (co)polymer component comprising:
   i. C₁-C₃₂ (meth)acrylic acid ester monomer units;
   ii. optionally, ethylenically unsaturated monomer units having functional groups selected from the group consisting of acid, hydroxyl, acid anhydride, epoxide, amine, amide groups, and any combinations thereof; and
   iii. optionally, further ethylenically unsaturated monomer units which are copolymerizable with monomer units (i) and/or (ii); and
b) optionally, a tackifying system.

According to another advantageous aspect of the pressure sensitive assembly of the present disclosure, the (meth)acrylate (co)polymer component for use herein comprises:
i. from 45 wt% to 99 wt% of C₁-C₃₂ (meth)acrylic acid ester monomer units, based on the weight of the (meth)acrylate (co)polymer component;
ii. optionally, from 1 wt% to 15 wt% of ethylenically unsaturated monomer units having functional groups, based on the weight of the (meth)acrylate (co)polymer component; and
iii. optionally, from 0 wt% to 40 wt% of further ethylenically unsaturated polar monomer units which are copolymerizable with monomer units (a) and/or (b), based on the weight of the (meth)acrylate (co)polymer component.

According to another advantageous aspect of the pressure sensitive assembly of the present disclosure, the first pressure sensitive adhesive layer and/or the second pressure sensitive adhesive layer and/or the third pressure sensitive adhesive layer have a composition comprising:
a) from 45 to 99 wt%, or from 60 to 90 wt%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
b) optionally, from 1 to 15 wt%, from 2 to 12 wt%, from 3 to 10 wt%, from 4 to 10 wt%, or even from 5to 10 wt% of a polar monomer, preferably a polar acrylate;
c) optionally from 1.0 to 40 wt%, from 3.0 to 40 wt%, from 5.0 to 35 wt%, or even from 10 to 30 wt%, of the second monomer having an ethylenically unsaturated group, preferably a second non-polar monomer having an ethylenically unsaturated group; and
d) optionally, from 1 to 20 wt%, from 1 to 15 wt%, from 1 to 10 wt%, from 2.0 to 8.0 wt%, from 2.5 to 6.0 wt%, or even from 3.0 to 6.0 wt% of a tackifying system,
wherein the weight percentages are based on the total weight of the first pressure sensitive adhesive layer or the second pressure sensitive adhesive layer or the third pressure sensitive adhesive layer.

In an advanategous aspect of the multilayer pressure sensitive adhesive assembly according to the disclosure, the tackifying system for use herein comprises a high Tg (meth)acrylate copolymer having a weight average molecular weight (Mw) of above 20,000 Daltons as described in any of claims 30 to 35.

According to still another advantageous aspect of the pressure sensitive assembly of the present disclosure, the second pressure sensitive adhesive layer and/or the third pressure sensitive adhesive layer have a composition comprising:
a) from 45 to 99 wt%, or from 60 to 90 wt%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
b) optionally, from 1 to 15 wt%, from 2 to 12 wt%, from 3 to 10 wt%, from 4to 10 wt%, or even from 5to10 wt% of a polar monomer, preferably a polar acrylate;
c) optionally from 1.0 to 40 wt%, from 3.0 to 40 wt%, from 5.0 to 35 wt%, or even from 10 to 30 wt%, of the second monomer having an ethylenically unsaturated group, preferably a second non-polar monomer having an ethylenically unsaturated group;
d) optionally, from 1 to 20 wt%, from 1 to 15 wt%, from 1 to 10 wt%, from 2.0 to 8.0 wt%, from 2.5 to 6.0 wt%, or even from 3.0 to 6.0 wt% of a tackifying system; and
e) from 1 to 30 wt%, from 2 to 25 wt%, from 2 to 20 wt%, or even from 3 to 15 wt%, of silica nanoparticles having an average particle size no greater than 400 nm,
wherein the weight percentages are based on the total weight of the second pressure sensitive adhesive layer or the third pressure sensitive adhesive layer.

The first pressure sensitive adhesive layer, the second pressure sensitive adhesive layer and the third pressure sensitive adhesive layer compositions may be obtained by any conventional manufacturing method, well known to those skilled in the art. The particular pressure-sensitive adhesive compositions may be prepared for example by a variety of conventional free radical polymerization methods, including solution, bulk (i.e., with little or no solvent), dispersion, emulsion, and suspension processes. In a particular aspect, the various pressure sensitive adhesive layer compositions are prepared by well-known solventless polymerization methods, in particular hotmelt polymerization methods.

In some methods of preparing the pressure sensitive adhesive composition(s) for the pressure sensitive adhesive layer(s) of the PSA assembly according to the disclosure, the polymerizable material containing the monomers is partially polymerized so as to increase its viscosity to that corresponding to a syrup-like material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group). Then, the crosslinker and any remaining portion of the initiator may be added to the syrup-like, partially polymerized material. Optional tackifiers and plasticizers may also be combined with the partially polymerized material. The resulting mixture can be more readily applied as a coating composition onto a support (e.g., release liner) or another layer (e.g., polymeric foam layer). The coating layer can then be exposed to actinic radiation if a photoinitator is present or to heat if a thermal initiator is present. Exposure to actinic radiation or heat typically results in the further reaction of polymerizable material within the coating composition.

To be useful as a pressure sensitive adhesive, the pressure sensitive adhesive material typically has a storage modulus of less than 300,000 Pascals at 25°C. The storage modulus of the pressure-sensitive adhesive material usually is no greater than 200,000 Pascals, no greater than 100,000 Pascals, no greater than 50,000 Pascals, or no greater than 25,000 Pascal at 25°C. For example, the storage modulus can be no greater than 10,000 Pascals, no greater than 9,000 Pascals, no greater than 8,000 Pascals, or no greater than 7,500 Pascals at 25°C. A lower storage modulus is often desirable for high performance pressure-sensitive adhesives.

According to another aspect, the present disclosure relates to a method of manufacturing a pressure sensitive adhesive assembly according to any of claims 1 to 43, which comprises the steps of:
a) providing a precursor composition of the first pressure sensitive adhesive layer;
b) providing a precursor composition of the second pressure sensitive adhesive layer comprising silica nanoparticles having an average particle size no greater than 400 nm when measured by Dynamic Light Scattering (DLS) techniques according to test method described in the experimental section;
c) coating the precursor composition of the first pressure sensitive adhesive layer on a substrate, and optionally, curing the precursor composition of the first pressure sensitive adhesive layer; and
d) coating the precursor composition of the second pressure sensitive adhesive layer on the precursor composition of the first pressure sensitive adhesive layer obtained in step c) and optionally, curing the precursor composition of second first pressure sensitive adhesive layer, thereby forming a precursor of the pressure sensitive adhesive assembly; and
e) optionally, curing the precursor of the pressure sensitive adhesive assembly obtained in step d).

According to a particular aspect of this method of manufacturing a pressure sensitive adhesive assembly, a liquid precursor of the first pressure sensitive adhesive layer is deposited on a substrate and then cured, preferably with actinic radiation, in particular UV radiation, e-beam radiation or by thermal curing.

According to another particular aspect of this method of manufacturing a pressure sensitive adhesive assembly, a liquid precursor of a second pressure sensitive adhesive layer and/or a third pressure sensitive adhesive layer is superimposed on the liquid precursor of the first pressure sensitive adhesive layer before curing.

According to an advantageous aspect, the multilayer pressure sensitive adhesive assembly as described herein is obtained by a wet-on-wet coating process step. Exemplary "wet-in-wet" production processes for use herein are described in detail in e.g. WO-A1-2011094385 (Hitschmann et al.) or in EP-A1-0259094 (Zimmerman et al.), the full disclosures of which are herewith fully incorporated by reference.

However, the manufacturing of the multilayer pressure sensitive adhesive assembly is not limited to the before mentioned method. For instance, the pressure sensitive adhesive assembly may be produced by co-extrusion, solvent-based methods or also combinations thereof.

According to an alternative method, the first pressure sensitive adhesive layer and/or the second pressure sensitive adhesive layer and/or the third pressure sensitive adhesive layer are prepared separately and subsequently laminated to each other.

According to another aspect, the present disclosure is directed to an article comprising a medium surface energy substrate and a multilayer pressure sensitive adhesive assembly as described above adjacent to the medium surface energy substrate.

Particular and preferred aspects relating to the multilayer pressure sensitive adhesive assembly, the silica nanoparticles, the first pressure sensitive adhesive layer, the second pressure sensitive adhesive layer, and the optional third pressure sensitive adhesive layer for use in the article of the present disclosure, are identical to those detailed above in the context of describing the multilayer pressure sensitive adhesive assembly.

Medium surface energy substrates for use herein are not particularly limited. Any medium surface energy substrates commonly known in the art, may be used in the context of the present disclosure. Suitable medium surface energy substrates for use herein may be easily identified by those skilled in the art in the light of the present disclosure.

According to an advantageous aspect, the medium surface energy substrate for use herein has a light-transmission of at least 80%, at least 85% or even at least 90%, relative to visible light, when measured according to ASTM E-1438.

Due to the excellent transparency characteristics provided by the multilayer pressure sensitive adhesive assembly of the present disclosure, the medium surface energy substrate for use in the article may be advantageously selected to have beneficial transparency characteristics as well.

According to an advantageous aspect, the article for use herein has a light-transmission of at least 80%, at least 85% or even at least 90%, relative to visible light, when measured according to ASTM E-1438.

In an exemplary aspect, the medium surface energy substrate for use in the article is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

In an advantageous aspect, the medium surface energy substrate for use in the article is selected from the group consisting of PMMA, ABS, and any combinations thereof.

According to still another aspect, the present disclosure relates to the use of a multilayer pressure sensitive adhesive assembly as describe above for the bonding to a medium surface energy substrate or a high surface energy substrate, in particular, a medium surface energy substrate.

In one particular aspect of this use, the high energy surface substrate for use herein is selected from the group of transparent siliceous substrates, in particular glass substrates.

In another particular aspect of this use, the medium surface energy substrate for use herein has a light-transmission of at least 80%, at least 85% or even at least 90%, relative to visible light, when measured according to ASTM E-1438.

In an exemplary aspect of this use, the medium surface energy substrate for use herein is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

According to an advantageous aspect of this use, the medium surface energy substrate for use herein is selected from the group consisting of PMMA, ABS, and any combinations thereof.

In still another aspect, the present disclosure is directed to the use a multilayer pressure sensitive assembly as described above for industrial applications, in particular for transportation, construction, decoration, home improvement and electronics applications.
Item 1 is a multilayer pressure sensitive adhesive assembly comprising at least a first pressure sensitive adhesive layer and a second pressure sensitive adhesive layer adjacent to the first pressure sensitive adhesive layer, wherein the first pressure sensitive adhesive layer and the second pressure sensitive adhesive layer comprise a polymer base material selected from the group of polyacrylates, wherein the second pressure sensitive adhesive layer has a thickness no greater than 250 micrometres and comprises silica nanoparticles having an average particle size no greater than 400 nm when measured by Dynamic Light Scattering (DLS) techniques according to test method described in the experimental section, and wherein the first pressure sensitive adhesive layer has a thickness in a range from 250 to 5000 micrometres and is substantially free of particulate filler material.
Item 2 is a multilayer pressure sensitive adhesive assembly according to item 1, which has an overall light-transmission (resulting from the light-transmission of the multilayer assembly), of at least 80%, at least 85% or even at least 90%, relative to visible light, when measured according to ASTM E-1438.
Item 3 is a multilayer pressure sensitive adhesive assembly according to any of item 1 or 2, which has an overall haze (resulting from the haze of the multilayer assembly) no greater than 2, no greater than 1.8, no greater than 1.6, no greater than 1.5, no greater than 1.4, or even no greater than 1.2, when measured in the transmissive mode according to ASTM D-1003-95.
Item 4 is a multilayer pressure sensitive adhesive assembly according to any of the preceding items, wherein the first pressure sensitive adhesive layer has a thickness in a range from 250 to 4000 micrometres, from 300 to 3000 micrometres, from 400 to 3000 micrometres, from 500 to 2500 micrometres, from 600 to 2500 micrometres, from 600 to 2000 micrometres, or even from 800 to 2000 micrometres.
Item 5 is a multilayer pressure sensitive adhesive assembly according to any of the preceding items, wherein the second pressure sensitive adhesive layer has a thickness no greater than 220 micrometres, no greater than 200 micrometres, no greater than 180 micrometres, no greater than 150 micrometres, no greater than 100 micrometres, no greater than 80 micrometres, no greater than 60 micrometres, or even no greater than 50 micrometres.
Item 6 is a multilayer pressure sensitive adhesive assembly according to any of the preceding items, wherein the second pressure sensitive adhesive layer has a thickness in a range from 20 to 250 micrometres, from 30 to 220 micrometres, from 40 to 200 micrometres, from 50 to 200 micrometres, or even from 60 to 180 micrometres.
Item 7 is a multilayer pressure sensitive adhesive assembly according to any of the preceding items, wherein the silica nanoparticles have an average particle size no greater than 350 nm, no greater than 300 nm, no greater than 250 nm, no greater than 200 nm, no greater than 150 nm, no greater than 100 nm, no greater than 80 nm, no greater than 60 nm, no greater than 50 nm, no greater than 40 nm, no greater than 30 nm, or even no greater than 20 nm, when measured by Dynamic Light Scattering (DLS) techniques according to test method described in the experimental section.
Item 8 is a multilayer pressure sensitive adhesive assembly according to any of the preceding items, wherein the silica nanoparticles have an average particle size in a range from 1 to 400 nm, from 2 to 350 nm, from 3 to 300 nm, from 3 to 250 nm, from 5 to 200 nm, from 5 to 150 nm, from 5 to 100 nm, from 5 to 80 nm, from 5 to 60 nm, or even from 10 to 50 nm, when measured by Dynamic Light Scattering (DLS) techniques according to test method described in the experimental section.
Item 9 is a multilayer pressure sensitive adhesive assembly according to any of the preceding items, wherein the silica nanoparticles are provided with a surface modification selected from the group of hydrophobic surface modifications, hydrophilic surface modifications, and any combinations thereof.
Item 10 is a multilayer pressure sensitive adhesive assembly according to any of the preceding items, wherein the silica nanoparticles are provided with a hydrophobic surface modification.
Item 11 is a multilayer pressure sensitive adhesive assembly according to any of the preceding items, wherein the silica nanoparticles are selected from the group consisting of fumed silica nanoparticles.
Item 12 is a multilayer pressure sensitive adhesive assembly according to any of the preceding items, wherein the silica nanoparticles are selected from the group consisting of hydrophobic fumed silica nanoparticles, hydrophilic fumed silica nanoparticles, and any combinations thereof.
Item 13 is a multilayer pressure sensitive adhesive assembly according to any of the preceding items, wherein the silica nanoparticles are selected from the group of hydrophobic fumed silica nanoparticles.
Item 14 is a multilayer pressure sensitive adhesive assembly according to any of the preceding items, wherein the silica nanoparticles have a specific surface area (BET) in a range from 50 to 200 m²/g, from 60 to 180 m²/g, from 60 to 160 m²/g, from 50 to 150 m²/g, from 60 to 150 m²/g, from 80 to 150 m²/g, or even from 90 to 130 m²/g, when measured according to BS ISO 9277: 2010.
Item 15 is a multilayer pressure sensitive adhesive assembly according to any of the preceding items, wherein the second pressure sensitive adhesive layer comprises silica nanoparticles having an average particle size no greater than 400 nm in an amount ranging from 1 to 30 wt%, from 2 to 25 wt%, from 2 to 20 wt%, or even from 3 to 15 wt%, based on the weight of the second pressure sensitive adhesive layer.
Item 16 is a multilayer pressure sensitive adhesive assembly according to any of the preceding items, wherein the first pressure sensitive adhesive layer is substantially free of particulate filler material having an average particle size no greater than 400 nm when measured by Dynamic Light Scattering (DLS) techniques according to test method described in the experimental section.
Item 17 is a multilayer pressure sensitive adhesive assembly according to any of the preceding items, wherein the first pressure sensitive adhesive layer is substantially free of particulate filler material having an average particle size greater than 400 nm when measured by Dynamic Light Scattering (DLS) techniques according to test method described in the experimental section.
Item 18 is a multilayer pressure sensitive adhesive assembly according to any of the preceding items, wherein the first pressure sensitive adhesive layer is substantially free of particulate filler material selected from the group consisting of hollow (non-porous) particulate filler material, in particular hollow microspheres, expandable or expanded microspheres, glass beads, glass bubbles, glass microspheres, ceramic microspheres, hollow polymeric particles, and any combinations or mixtures thereof.
Item 19 is a multilayer pressure sensitive adhesive assembly according to any of the preceding items, wherein the first pressure sensitive adhesive layer is substantially free of particulate filler material selected from the group consisting of silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof.
Item 20 is a multilayer pressure sensitive adhesive assembly according to any of the preceding items, wherein the first pressure sensitive adhesive layer does not take the form of a polymeric foam layer.
Item 21 is a multilayer pressure sensitive adhesive assembly according to any of the preceding items, which is in the form of a skin/core multilayer pressure sensitive adhesive assembly, wherein the first pressure sensitive adhesive layer is the core layer of the multilayer pressure sensitive adhesive assembly and the second pressure sensitive adhesive layer is the skin layer of the multilayer pressure sensitive adhesive assembly.
Item 22 is a multilayer pressure sensitive adhesive assembly according to any of the preceding items, which further comprises a third pressure sensitive adhesive layer which is preferably adjacent to the first pressure sensitive adhesive layer in the side of the first pressure sensitive adhesive layer which is opposed to the side of the first pressure sensitive adhesive layer adjacent to the second pressure sensitive adhesive layer.
Item 23 is a multilayer pressure sensitive adhesive assembly according to item 22, which is in the form of a skin/core/skin multilayer pressure sensitive adhesive assembly, wherein the first pressure sensitive adhesive layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.
Item 24 is a multilayer pressure sensitive adhesive assembly according to any of item 22 or 23, wherein the first pressure sensitive adhesive layer, the second pressure sensitive adhesive layer and the third pressure sensitive adhesive layer comprise a polymer base material selected from the group consisting of polyacrylates.
Item 25 is a multilayer pressure sensitive adhesive assembly according to any of items 22 to 24, wherein the first pressure sensitive adhesive layer, the second pressure sensitive adhesive layer and the third pressure sensitive adhesive layer comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 30, from 1 to 20, or even from 1 to 15 carbon atoms.
Item 26 is a multilayer pressure sensitive adhesive assembly according to any of items 22 to 25, wherein the first pressure sensitive adhesive layer, the second pressure sensitive adhesive layer and the third pressure sensitive adhesive layer comprise a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.
Item 27 is a multilayer pressure sensitive adhesive assembly according to item 26, wherein the linear or branched alkyl (meth)acrylate ester is selected from the group consisting of iso-octyl (meth)acrylate, 2-ethylhexyl (meth)acrylate, 2-propylheptyl (meth)acrylate, butyl acrylate, and any combinations or mixtures thereof.
Item 28 is a multilayer pressure sensitive adhesive assembly according to item 26, wherein the linear or branched alkyl (meth)acrylate ester is selected from the group consisting of iso-octyl acrylate, 2-ethylhexyl acrylate and 2-propylheptyl acrylate.
Item 29 is a multilayer pressure sensitive adhesive assembly according to any of items 22 to 28, wherein the polymer base material further comprises a polar comonomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof.
Item 30 is a multilayer pressure sensitive adhesive assembly according to any of items 22 to 29, wherein the polymer base material further comprises a high Tg (meth)acrylate copolymer having a weight average molecular weight (Mw) of above 20,000 Daltons, and comprising:
   i. high Tg (meth)acrylic acid ester monomer units;
   ii. optionally, acid functional ethylenically unsaturated monomer units;
   iii. optionally, low Tg (meth)acrylic acid ester monomer units;
   iv. optionally, non-acid functional, ethylenically unsaturated polar monomer units; and
   v. optionally, vinyl monomer units.
Item 31 is a multilayer pressure sensitive adhesive assembly according to item 30, wherein the high Tg (meth)acrylate copolymer has a Tg of above 50°C, above 75°C, or even above 100°C.
Item 32 is a multilayer pressure sensitive adhesive assembly according to any of item 30 or 31, wherein the high Tg (meth)acrylate copolymer has a weight average molecular weight (Mw) of above 25,000 Daltons, above 30,000 Daltons, above 35,000 Daltons, or even above 40,000 Daltons.
Item 33 is a multilayer pressure sensitive adhesive assembly according to any of items 30 to 32, wherein the high Tg (meth)acrylate copolymer has a weight average molecular weight (Mw) of below 100,000 Daltons, below 80,000 Daltons, below 75,000 Daltons, below 60,000 Daltons, below 50,000 Daltons, or even below 45,000 Daltons.
Item 34 is a multilayer pressure sensitive adhesive assembly according to any of items 30 to 33, wherein the high Tg (meth)acrylic acid ester monomer units are selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any combinations or mixtures thereof.
Item 35 is a multilayer pressure sensitive adhesive assembly according to any of items 30 to 34, wherein the high Tg (meth)acrylate copolymer comprises:
   i. up to 100 parts by weight of high Tg (meth)acrylic acid ester monomer units;
   ii. 0 to 15, or even 1 to 5 parts by weight of acid functional ethylenically unsaturated monomer units;
   iii. 0 to 50, or even 1 to 25 parts by weight of optional low Tg (meth)acrylic acid ester monomer units;
   iv. 0 to 10, or even 1 to 5 parts by weight of optional non-acid functional, ethylenically unsaturated polar monomer units; and
   v. 0 to 5, or even 1 to 5 parts by weight of optional vinyl monomer units.
Item 36 is a multilayer pressure sensitive adhesive assembly according to any of items 22 to 35, wherein the third pressure sensitive adhesive layer further comprises silica nanoparticles as described in any of items 1 to 15.
Item 37 is a multilayer pressure sensitive adhesive assembly according to any of items 22 to 35, wherein the third pressure sensitive adhesive layer is substantially free of particulate filler material as described in any of items 16 to 19.
Item 38 is a multilayer pressure sensitive adhesive assembly according to any of items 22 to 37, wherein the second pressure sensitive adhesive layer and the third pressure sensitive adhesive layer have (substantially) the same composition.
Item 39 is a multilayer pressure sensitive adhesive assembly according to any of items 22 to 38, wherein the first pressure sensitive adhesive layer and/or the second pressure sensitive adhesive layer and/or the third pressure sensitive adhesive layer have a composition comprising:
   a) a (meth)acrylate (co)polymer component comprising:
      i. C₁-C₃₂ (meth)acrylic acid ester monomer units;
      ii. optionally, ethylenically unsaturated monomer units having functional groups selected from the group consisting of acid, hydroxyl, acid anhydride, epoxide, amine, amide groups, and any combinations thereof; and
      iii. optionally, further ethylenically unsaturated monomer units which are copolymerizable with monomer units (i) and/or (ii); and
   b) optionally, a tackifying system.
Item 40 is a multilayer pressure sensitive adhesive assembly according to item 39, wherein the (meth)acrylate (co)polymer component comprises:
   i. from 45 wt% to 99 wt% of C₁-C₃₂ (meth)acrylic acid ester monomer units, based on the weight of the (meth)acrylate (co)polymer component;
   ii. optionally, from 1 wt% to 15 wt% of ethylenically unsaturated monomer units having functional groups, based on the weight of the (meth)acrylate (co)polymer component; and
   iii. optionally, from 0 wt% to 40 wt% of further ethylenically unsaturated polar monomer units which are copolymerizable with monomer units (a) and/or (b), based on the weight of the (meth)acrylate (co)polymer component.
Item 41 is a multilayer pressure sensitive adhesive assembly according to any of items 22 to 40, wherein the first pressure sensitive adhesive layer and/or the second pressure sensitive adhesive layer and/or the third pressure sensitive adhesive layer have a composition comprising:
   a) from 45 to 99 wt%, or from 60 to 90 wt%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
   b) optionally, from 1 to 15 wt%, from 2 to 12 wt%, from 3 to 10 wt%, from 4 to 10 wt%, or even from 5 to 10 wt% of a polar monomer, preferably a polar acrylate;
   c) optionally from 1.0 to 40 wt%, from 3.0 to 40 wt%, from 5.0 to 35 wt%, or even from 10 to 30 wt%, of the second monomer having an ethylenically unsaturated group, preferably a second non-polar monomer having an ethylenically unsaturated group; and
   d) optionally, from 1 to 20 wt%, from 1 to 15 wt%, from 1 to 10 wt%, from 2.0 to 8.0 wt%, from 2.5 to 6.0 wt%, or even from 3.0 to 6.0 wt% of a tackifying system,
   wherein the weight percentages are based on the total weight of the first pressure sensitive adhesive layer or the second pressure sensitive adhesive layer or the third pressure sensitive adhesive layer.
Item 42 is a multilayer pressure sensitive adhesive assembly according to any of items 39 to 41, wherein the tackifying system comprises a high Tg (meth)acrylate copolymer having a weight average molecular weight (Mw) of above 20,000 Daltons as described in any of items 30 to 35.
Item 43 is a multilayer pressure sensitive adhesive assembly according to any of item 22 to 42, wherein the second pressure sensitive adhesive layer and/or the third pressure sensitive adhesive layer have a composition comprising:
   a) from 45 to 99 wt%, or from 60 to 90 wt%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
   b) optionally, from 1 to 15 wt%, from 2 to 12 wt%, from 3 to 10 wt%, from 4 to 10 wt%, or even from 5 to 10 wt% of a polar monomer, preferably a polar acrylate;
   c) optionally from 1.0 to 40 wt%, from 3.0 to 40 wt%, from 5.0 to 35 wt%, or even from 10 to 30 wt%, of the second monomer having an ethylenically unsaturated group, preferably a second non-polar monomer having an ethylenically unsaturated group;
   d) optionally, from 1 to 20 wt%, from 1 to 15 wt%, from 1 to 10 wt%, from 2.0 to 8.0 wt%, from 2.5 to 6.0 wt%, or even from 3.0 to 6.0 wt% of a tackifying system; and
   e) from 1 to 30 wt%, from 2 to 25 wt%, from 2 to 20 wt%, or even from 3 to 15 wt%, of silica nanoparticles having an average particle size no greater than 400 nm,
   wherein the weight percentages are based on the total weight of the second pressure sensitive adhesive layer or the third pressure sensitive adhesive layer.
Item 44 is an article comprising a medium surface energy substrate and a multilayer pressure sensitive adhesive assembly according to any of the preceding items adjacent to the medium surface energy substrate.
Item 45 is an article according to item 44, wherein the medium surface energy substrate has a light-transmission of at least 80%, at least 85% or even at least 90%, relative to visible light, when measured according to ASTM E-1438.
Item 46 is an article according to any of item 44 or 45, wherein the medium surface energy substrate is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.
Item 47 is an article according to any of items 44 to 46, wherein the medium surface energy substrate is selected from the group consisting of PMMA, ABS, and any combinations thereof.
Item 48 is an article according to any of items 44 to 47, which has a light-transmission of at least 80%, at least 85% or even at least 90%, relative to visible light, when measured according to ASTM E-1438.
Item 49 is a method for manufacturing a multilayer pressure sensitive adhesive assembly according to to any of items 1 to 43, which comprises the steps of:
   a) providing a precursor composition of the first pressure sensitive adhesive layer;
   b) providing a precursor composition of the second pressure sensitive adhesive layer comprising silica nanoparticles having an average particle size no greater than 400 nm when measured by Dynamic Light Scattering (DLS) techniques according to test method described in the experimental section;
   c) coating the precursor composition of the first pressure sensitive adhesive layer on a substrate, and optionally, curing the precursor composition of the first pressure sensitive adhesive layer; and
   d) coating the precursor composition of the second pressure sensitive adhesive layer on the precursor composition of the first pressure sensitive adhesive layer obtained in step c) and optionally, curing the precursor composition of second first pressure sensitive adhesive layer, thereby forming a precursor of the multilayer pressure sensitive adhesive assembly; and
   e) optionally, curing the precursor of the multilayer pressure sensitive adhesive assembly obtained in step d).
Item 50 is a method according to item 49, whereby a liquid precursor of the first pressure sensitive adhesive layer is deposited on a substrate and then cured, preferably with actinic radiation, in particular UV radiation, e-beam radiation or by thermal curing.
Item 51 is a method according to item 50, whereby a liquid precursor of a second pressure sensitive adhesive layer and/or a third pressure sensitive adhesive layer is superimposed on the liquid precursor of the first pressure sensitive adhesive layer before curing.
Item 52 is a method of manufacturing a multilayer pressure sensitive adhesive assembly according to any of items 1 to 43, whereby the multilayer pressure sensitive adhesive assembly is produced by hotmelt (co-)extrusion, solvent-based methods or any combinations thereof.
Item 53 is a method of manufacturing a multilayer pressure sensitive adhesive assembly according to any of items 1 to 43, whereby the first pressure sensitive adhesive layer and/or the second pressure sensitive adhesive layer and/or the third pressure sensitive adhesive layer are prepared separately and subsequently laminated to each other.
Item 54 is the use of a multilayer pressure sensitive adhesive assembly according to any of items 1 to 43 for the bonding to a medium surface energy substrate or a high surface energy substrate, in particular, a medium surface energy substrate.
Item 55 is the use according to item 54, wherein the medium surface energy substrate has a light-transmission of at least 80%, at least 85% or even at least 90%, relative to visible light, when measured according to ASTM E-1438.
Item 56 is the use according to any of item 54 or 55, wherein the medium surface energy substrate is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.
Item 57 is the use according to any of item 54 to 56, wherein the medium surface energy substrate is selected from the group consisting of PMMA, ABS, and any combinations thereof.
Item 58 is the use according to item 54, wherein the high surface energy substrate is selected from the group of transparent siliceous substrates, in particular glass substrates.

### EXAMPLES

The present disclosure is further illustrated by the following examples. These examples are merely for illustrative purposes only and are not meant to be limiting on the scope of the appended claims.

### Test Methods applied:

### 90°-Peel-test at 300 mm/min (according to Test Method, Finat No. 2, 8^{th} edition 2009)

Multilayer pressure sensitive adhesive assembly strips according to the present disclosure and having a width of 12.7 mm and a length > 120 mm are cut out in the machine direction from the sample material. For test sample preparation the liner is first removed from the one adhesive side and placed on an aluminum strip having the following dimension 22 x 1.6 cm, 0.13 mm thickness. Then, the adhesive coated side of each PSA assembly strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell at ambient room temperature (23°C +/- 2°C, 50% relative humidity +/-5%) for 72 hours prior to testing. For peel testing the test samples are in a first step clamped in the lower movable jaw of a Zwick tensile tester (Model Z005 commercially available from Zwick/Roell GmbH, Ulm, Germany). The multilayer pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

### Average particle size

The average particle size of the silica nanoparticles may be determined by Dynamic Light Scattering (DLS) techniques according to test method ISO 22412:2008(EN).

### Molecular Weight measurement

The weight average molecular weight of the polymers is determined using conventional gel permeation chromatography (GPC). The GPC apparatus obtained from Waters, include a high-pressure liquid chromatography pump (Model 600E), an auto-sampler (Model 712 WISP), and a refractive index detector (Model 2414). The chromatograph is equipped with three Mixed Bed type B (10µm particle) columns 300 x 7.5 mm from Agilent.

Polymeric solutions for testing are prepared by dissolving a polymer in 1ml tetrahydrofuran at a concentration of 0.3% polymer by weight. 300 µl etheral alcoholic diazomethane solution (0.4 mol/1) is added and the sample is kept for 60 minutes at room temperature. The sample is then blown to dryness under a stream of nitrogen at room temperature. The dried sample is dissolved in THF, containing 0.1% toluene, to yield a 0.1% w/v solution. The solution is then filtered through a 0.45 micron polytetrafluoroethylene filter. 100 µl of the resulting solution is injected into the GPC and eluted at a rate of 1.00 milliliter per minute through the columns maintained at 40°C. Toluene is used as a flow rate marker. The system is calibrated with polystyrene standards (10 standards, divided in 3 solutions in the range between 470 Da and 7300000 Da) using a 3rd order regression analysis to establish a calibration curve. The weight average molecular weight (Mw) is calculated for each sample from the calibration curve.

### Test Substrates used for testing:

The pressure sensitive adhesive compositions and assemblies according to the present disclosure are tested for their adhesive properties on following substrates:
- Steel: Stainless Steel (SS) plate ("Edelstahl 1.4301 HID", 150 mm x 50 mm x 2 mm), available from Rocholl GmbH, Aglatershausen, Germany. Prior to testing, the substrates are first cleaned with MEK and n-heptane, dried with a tissue, and then cleaned with MEK and dried with a tissue.
- PMMA (Poly methyl methacrylate) test panels (150 mm x 25 mm x 2 mm), available from Rocholl GmbH, Aglatershausen, Germany. These test panels are cleaned with a 1:1 mixture of isopropylalcohol and distilled water and rubbed dry with a paper tissue after cleaning.
- ABS (Acrylonitrile butadiene styrene) test panels (Metzoplast ABS/G, 150 mm x 25 mm x 2 mm), available from Rocholl GmbH, Aglatershausen, Germany. Prior to testing, these test panels are cleaned with a 1:1 mixture of isopropylalcohol and distilled water and rubbed dry with a paper tissue after cleaning.

### Raw materials used:

In the examples, the following raw materials and commercial adhesive tapes used are used:
**2-Ethylhexylacrylate** (2-EHA, C8-acrylate) is an ester of 2-ethylalcohol and acrylic acid which is obtained from BASF AG, Germany.
**Acrylic acid** (AA) is obtained from BASF AG, Germany.
**Isobornylacrylate** (SR 506D) is a monofunctional acrylic monomer available from Cray Valley, France.
**Isooctyl thioglycolate** (IOTG) is a chain transfer agent and commercially available by Bruno Bock Chemische Fabrik, Germany.
**Vazo 52** (2,2'-Azobis(2,4 dimethylpentanenitrile)) is a thermal polymerization-initiator and is available from Dupont.
**Omnirad BDK** (2,2-dimethoxy-2-phenylacetophenone) is a UV-initiator and is available from iGm resins, Waalwijk Netherlands.
**1,6-Hexanedioldiacrylate** (HDDA) is a fast curing diacrylate and is obtained from BASF AG, Germany.
**HTGO** is a high Tg acrylic oligomer having a M_{w} of 25.000 g/mol, used as 50wt% dilution in 2-PHA) and prepared according to the procedure described in EP-A1-2803712 (Wieneke et al.) for the copolymer referred to as HTG-1d.
**Aerosil R-972** are hydrophobic fumed silica particles, available from Evonik, Germany.

### Preparation of the precursors of the first pressure sensitive adhesive layers (core layers):

The precursors of the first pressure sensitive adhesive compositions and the corresponding first pressure sensitive adhesive core layers (core layers), hereinafter referred to as CPL 1 (comparative) and PL 2, are prepared by combining the C8 acrylate (2-EHA) and the acrylic acid (between 5 and 10 wt%) with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 23°C, spindle 4, 12 rpm). Additionally, the remaining amount of Omnirad BDK, the HDDA crosslinker, and optionally, the fumed silica particles are added to the composition and mixed until they have dissolved / dispersed. The exact formulations of the polymerization precursor compositions for first pressure sensitive adhesive layers CPL 1 and PL 2 are listed (in pph) in Table 1 below.

**Table 1**

| | 2-EHA | AA | HDDA | Omnirad BDK | Aerosil |
|---|---|---|---|---|---|
| CPL 1 | 90 | 10 | 0.1 | 0.15 | 10 |
| PL 2 | 90 | 10 | 0.1 | 0.15 | - |

### Preparation of the precursors of the second pressure sensitive adhesive layers (skin layers):

The precursors of the second pressure sensitive adhesive layers (skin layers), hereinafter referred to as CSL 1-2 (comparative) and SL 3-4, are prepared by combining the C8 acrylate (2-EHA) and the acrylic acid with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 25 °C, spindle 4, 12 rpm). Additionally, the remaining amount of Omnirad BDK, the HDDA crosslinker, the monomeric IBOA, the HTGO oligomer and the fumed silica particles (if present) are added to the composition and mixed until they have dissolved/dispersed. The HTGO is added as a dilution in 2-EHA. The exact formulation of the polymerization precursor compositions for the second pressure sensitive adhesive layers CSL 1-2 and SL 3-4 are listed (in pph) in Table 2 below.

**Table 2**

| | 2-EHA | AA | IBOA | HTGO | HDDA | Omnirad BDK | Aerosil |
|---|---|---|---|---|---|---|---|
| CSL 1 | 90 | 10 | - | - | 0.1 | 0.15 | - |
| CSL 2 | 80 | 5 | 15 | 5 | 0.1 | 0.15 | - |
| SL 3 | 90 | 10 | - | - | 0.1 | 0.15 | 10 |
| SL 4 | 80 | 5 | 15 | 5 | 0.1 | 0.15 | 10 |

### Preparation of the multilayer pressure sensitive adhesive assemblies for Ex.1 to Ex.6

The precursors of the pressure sensitive adhesive layer skins and of pressure sensitive adhesive core layers, are superimposed onto each other in a coater, according to the method described in WO-A1-2011094385 (Hitschmann et al.). Hereby, the liquid precursors of the pressure sensitive adhesive skin layers are coated on both sides of the pressure sensitive adhesive core layers. The knife height setting is 130-140 micrometers for the first and third knife (for the pressure sensitive adhesive skin layers) and 1240-1250 micrometers for the second knife (for the core layers), both levels calculated from the substrate surface. Curing is accomplished from both top and bottom side in a UV-curing station with a length of 300 cm at the line speed set to 0.82 m/min. The total radiation intensity irradiated cumulatively from top and bottom is approximately 3 mW/cm2. The resulting multilayer pressure sensitive adhesive assemblies have a core layer with a thickness of about 800 micrometers and two skin layers with a thickness of about 100 micrometers (2 x 100 micrometers). When the pressure sensitive adhesive assembly does not comprise any skin layers, the core layer has a thickness of about 1000 micrometers.

### Examples used for testing

The tested examples are listed in Table 3 below.

Examples 3 and 5 are according to the disclosure. Examples 1, 2, 4 and 6 are comparative examples.

**Table 3**

| Example No. | Core layer used | Skin layer used |
|---|---|---|
| Ex.1 | CPL 1 | - |
| Ex.2 | PL 2 | - |
| Ex.3 | PL 2 | SL 3 |
| Ex.4 | PL 2 | CSL 1 |
| Ex.5 | PL 2 | SL 4 |
| Ex.6 | PL 2 | CSL 2 |

### Test Results

### 90°Peel on stainless-steel test plates (72h, room temperature)

Table 4 shows the 90° peel values of the multilayer pressure sensitive adhesive assemblies according to Ex.1 to Ex.6 after 72h dwell time at room temperature (RT) on stainless steel substrates.

**Table 4**

| Example No. | Peel value on SS (N/cm) |
|---|---|
| Ex.1 | 25 |
| Ex.2 | 38 |
| Ex.3 | 51 |
| Ex.4 | 29 |
| Ex.5 | 48 |
| Ex.6 | 25 |

Table 4 shows the improved peel adhesion performance obtained with multilayer pressure sensitive adhesive assemblies according to the disclosure (Examples 3 and 5) on stainless steel, when compared to comparative pressure sensitive adhesive assemblies not according to the disclosure (Examples 1, 2, 4 and 6).

### 90°Peel on PMMA test plates (72h, room temperature)

Table 5 shows the 90° peel values of the multilayer pressure sensitive adhesive assembly according to Ex.5 and comparative multilayer pressure sensitive assembly of Ex.6 after 72h dwell time at room temperature (RT) to PMMA substrates.

**Table 5**

| Example No. | Peel value on PMMA (N/cm) |
|---|---|
| Ex.5 | 30 |
| Ex.6 | 18 |

Table 5 shows the improved peel strength performance obtained with multilayer pressure sensitive adhesive assemblies according to the disclosure (Ex.5) on PMMA, when compared to comparative multilayer pressure sensitive adhesive assembly not according to the disclosure (Ex.6).

## Claims

1. A multilayer pressure sensitive adhesive assembly comprising at least a first pressure sensitive adhesive layer and a second pressure sensitive adhesive layer adjacent to the first pressure sensitive adhesive layer, wherein the first pressure sensitive adhesive layer and the second pressure sensitive adhesive layer comprise a polymer base material selected from the group of polyacrylates, wherein the second pressure sensitive adhesive layer has a thickness no greater than 250 micrometres and comprises silica nanoparticles having an average particle size no greater than 400 nm when measured by Dynamic Light Scattering (DLS) techniques according to the test method described in the experimental section, and wherein the first pressure sensitive adhesive layer has a thickness in a range from 250 to 5000 micrometres and is substantially free of particulate filler material.

2. A multilayer pressure sensitive adhesive assembly according to claim 1, which has an overall light-transmission, of at least 80%, at least 85% or even at least 90%, relative to visible light, when measured according to ASTM E-1438.

3. A multilayer pressure sensitive adhesive assembly according to any of claim 1 or 2, which has an overall haze (resulting from the haze of the multilayer assembly) no greater than 2, no greater than 1.8, no greater than 1.6, no greater than 1.5, no greater than 1.4, or even no greater than 1.2, when measured in the transmissive mode according to ASTM D-1003-95.

4. A multilayer pressure sensitive adhesive assembly according to any of the preceding claims, wherein the second pressure sensitive adhesive layer has a thickness no greater than 220 micrometres, no greater than 200 micrometres, no greater than 180 micrometres, no greater than 150 micrometres, no greater than 100 micrometres, no greater than 80 micrometres, no greater than 60 micrometres, or even no greater than 50 micrometres.

5. A multilayer pressure sensitive adhesive assembly according to any of the preceding claims, wherein the silica nanoparticles have an average particle size no greater than 350 nm, no greater than 300 nm, no greater than 250 nm, no greater than 200 nm, no greater than 150 nm, no greater than 100 nm, no greater than 80 nm, no greater than 60 nm, no greater than 50 nm, no greater than 40 nm, no greater than 30 nm, or even no greater than 20 nm, when measured by Dynamic Light Scattering (DLS) techniques according to test method described in the experimental section.

6. A multilayer pressure sensitive adhesive assembly according to any of the preceding claims, wherein the silica nanoparticles are provided with a surface modification selected from the group of hydrophobic surface modifications, hydrophilic surface modifications, and any combinations thereof.

7. A multilayer pressure sensitive adhesive assembly according to any of the preceding claims, wherein the silica nanoparticles are selected from the group consisting of fumed silica nanoparticles.

8. A multilayer pressure sensitive adhesive assembly according to any of the preceding claims, wherein the second pressure sensitive adhesive layer comprises silica nanoparticles having an average particle size no greater than 400 nm in an amount ranging from 1 to 30 wt%, from 2 to 25 wt%, from 2 to 20 wt%, or even from 3 to 15 wt%, based on the weight of the second pressure sensitive adhesive layer.

9. A multilayer pressure sensitive adhesive assembly according to any of the preceding claims, wherein the first pressure sensitive adhesive layer is substantially free of particulate filler material selected from the group consisting of hollow (non-porous) particulate filler material, in particular hollow microspheres, expandable or expanded microspheres, glass beads, glass bubbles, glass microspheres, ceramic microspheres, hollow polymeric particles, and any combinations or mixtures thereof.

10. A multilayer pressure sensitive adhesive assembly according to any of the preceding claims, wherein the polymer base material further comprises a high Tg (meth)acrylate copolymer having a weight average molecular weight (Mw) of above 20,000 Daltons, and comprising:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units; and
v. optionally, vinyl monomer units.

11. An article comprising a medium surface energy substrate and a multilayer pressure sensitive adhesive assembly according to any of the preceding claims adjacent to the medium surface energy substrate.

12. An article according to claim 11, wherein the medium surface energy substrate has a light-transmission of at least 80%, at least 85% or even at least 90%, relative to visible light, when measured according to ASTM E-1438.

13. An article according to any of claim 11 or 12, wherein the medium surface energy substrate is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

14. A method for manufacturing a multilayer pressure sensitive adhesive assembly according to any of claims 1 to 10, which comprises the steps of:
a) providing a precursor composition of the first pressure sensitive adhesive layer;
b) providing a precursor composition of the second pressure sensitive adhesive layer comprising silica nanoparticles having an average particle size no greater than 400 nm when measured by Dynamic Light Scattering (DLS) techniques according to test method described in the experimental section;
c) coating the precursor composition of the first pressure sensitive adhesive layer on a substrate, and optionally, curing the precursor composition of the first pressure sensitive adhesive layer; and
d) coating the precursor composition of the second pressure sensitive adhesive layer on the precursor composition of the first pressure sensitive adhesive layer obtained in step c) and optionally, curing the precursor composition of second first pressure sensitive adhesive layer, thereby forming a precursor of the multilayer pressure sensitive adhesive assembly; and
e) optionally, curing the precursor of the multilayer pressure sensitive adhesive assembly obtained in step d).

15. Use of a multilayer pressure sensitive adhesive assembly according to any of claims 1 to 10 for the bonding to a medium surface energy substrate or a high surface energy substrate, in particular, a medium surface energy substrate.
